# EUROPÄISCHE PATENTANMELDUNG

(11) **EP 1 187 295 A2**
(43) Veröffentlichungstag der Anmeldung: **13.03.2002**
(21) Anmeldenummer: 01121441.8
(22) Anmeldetag: 07.09.2001
(51) Int. Cl.: H02J 7/00, F02N 11/04

(54) **Verfahren zum Betreiben eines Kraftfahrzeugs und Anordnung zur Durchführung des Verfahrens**

(30) Priorität: 11.09.2000 DE 10045004
(71) Anmelder: Denso Manufacturing Italia S.p.A., 20121 Milano (IT)
(72) Erfinder: Bordne, Frank, 71229 Leonberg (DE); Balzano, Vincenzo, 67031 Castel Di Sangro (IT)
(74) Vertreter: Quinterno, Giuseppe

(57) **Zusammenfassung**

Die Erfindung betrifft ein Verfahren zum Betreiben eines Kraftfahrzeugs, wobei ein Verbrennungsmotor in Drehbewegung versetzt wird und ein Generator zur Versorgung eines Energiespeichers und/oder eines Bordnetzes im Fahrzeug in Bewegung versetzt wird, wobei zumindest in der Startphase der Generator abhängig von Betriebsparametern gleichzeitig mit oder zeitverzögert gegenüber dem Verbrennungsmotor gestartet wird, indem einem Regler des Generators ein Steuersignal zugeführt wird, welches einen Betriebszustand einer Elektromaschine des Generators simuliert.

## Beschreibung

Die Erfindung betrifft Verfahren zum Betreiben eines Kraftfahrzeugs sowie eine Anordnung zur Durchführung des Verfahrens gemäß dem Oberbegriff der unabhängigen Ansprüche 1 und 8.

Es ist bekannt, daß beim Anlassen eines Kraftfahrzeugs der Verbrennungsmotor und der Generator zur Versorgung des Bordnetzes und zum Laden der Batterie gestartet werden. Beim Kaltstart des Fahrzeugs treten jedoch unerwünscht hohe Emissionen auf, da die Katalysatoranlage des Fahrzeugs noch nicht auf Betriebstemperatur ist und durch niedrige Aggregatetemperaturen ein erhöhter Kraftstoffverbrauch zu verzeichnen ist.

Der Erfindung liegt die Aufgabe zugrunde, ein Verfahren zum Betreiben eines Kraftfahrzeugs und eine Anordnung zur Durchführung des Verfahrens anzugeben, womit eine Reduzierung der Emissionen des Kraftfahrzeugs möglich ist.

Diese Aufgabe wird bei einem Verfahren mit den Merkmalen des Anspruchs 1 und einer Anordnung mit den Merkmalen des Anspruchs 8 gelöst.

Erfindungsgemäß wird der Generator abhängig von den Betriebsparametern des Fahrzeugs sofort oder zeitverzögert zum Start des Verbrennungsmotors zugeschaltet.

Der besondere Vorteil besteht darin, daß in der Kaltstartphase der Verbrennungsmotor entlastet wird, so daß weniger Kraftstoff verbraucht wird, andererseits aber auch die Fahrzeugbatterie geschont wird, da eine Tiefentladung zuverlässig verhindert werden kann. Die erfindungsgemäße Anordnung ist besonders einfach zu realisieren, da kein aufwendiger und teuerer Regler notwendig ist. Vielmehr kann ein Regler verwendet werden, wie er üblicherweise im Fahrzeug eingesetzt wird.

Zusätzlich kann im Normalbetrieb durch geeignetes elektrisches Zu- oder Abschalten des Generators eine Verbrauchsersparnis durch Entlastung des Verbrennungsmotors erreicht werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung einer Vorrichtung nach dem Stand der Technik und
- Fig. 2: eine Prinzipdarstellung einer bevorzugten Anordnung zur Durchführung des Verfahrens.

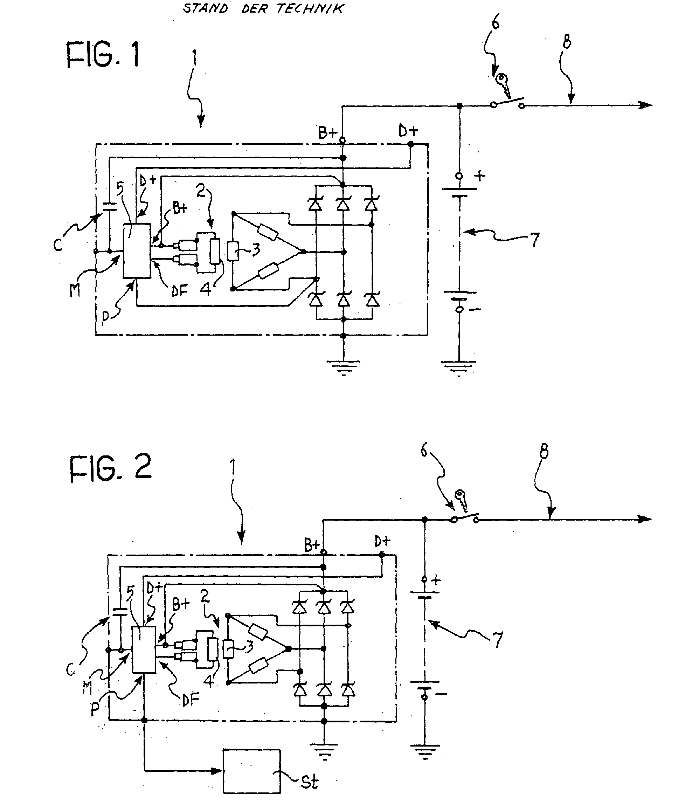

In Fig. 1 ist eine Prinzipdarstellung einer Schaltungsanordnung gemäß dem Stand der Technik dargestellt. Ein Generator 1 weist eine elektrische Maschine 2 mit Stator 3 und Rotor 4 auf, sowie einen Regler 5, der auf die elektrische Maschine 2, bevorzugt eine Synchronmaschine, einwirkt. Der Stator 3 weist vorzugsweise 3 übliche Leistungsspulen auf. Der übliche Regler 5 hat einen Eingang B+ für die Versorgungsspannung, einen Eingang/Ausgang D+ zur Diagnose, z.B. für eine Batteriewarnleuchte, einen Ausgang DF zum Steuern der Erregerspule des Stators 3, sowie einen Masseanschluß M. Am Eingang P erhält der Regler 5 ein Phasensignal der Elektromaschine 2, welches für den Betriebszustand der Maschine charakteristisch ist. Sobald der Rotor 4 dreht, weist das elektrische Signal am Eingang P eine Welligkeit auf, die durch einen Restmagnetismus im Eisen der Maschine verursacht wird. Ein üblicher Regler 5 kann auch weitere Eingänge aufweisen, z.B. für die Batteriespannung, der Batterie 7 und/oder die Batterietemperatur.

Beim Schließen des Zündschlosses 6 wird der nicht dargestellte Verbrennungsmotor gestartet, und die elektrische Maschine 2 des Generators 1 läuft mechanisch an, da diese mit einem üblichen Riementrieb mit dem Verbrennungsmotor gekoppelt ist. Entsprechend dem Phasensignal am Eingang P wird dann jeweils die Erregerwicklung des Rotors 4 bestromt, so daß an den Statorsträngen 3 der Maschine 2 elektrische Leistung ansteht.

Die im Generatormode der Maschine 2 erzeugte elektrische Spannung kann zum Laden der Batterie 7 und zur Versorgung von elektrischen Verbrauchern im Bordnetz 8 verwendet werden.

Es zeigt sich jedoch, daß die Rohemissionen beim Fahrzeugstart hoch sind, da unter anderem die Elektromaschine 2 den Verbrennungsmotor des Fahrzeugs belastet. Vorzugsweise wird in dieser Phase die Belastung des Verbrennungsmotors vermindert, indem der Generator 1 abhängig von Betriebsparametern sofort oder mit einer Zeitverzögerung elektrisch zugeschaltet wird.

In Fig. 2 ist eine bevorzugte Ausgestaltung gemäß der Erfindung dargestellt. Die Anordnung entspricht weitgehend der Anordnung in der Fig. 1. Gleiche Elemente sind mit denselben Bezugszeichen benannt. Gemäß der Erfindung ist der Phaseneingang P nicht mit dem Stator 3 elektrisch verbunden. Das Phasensignal wird durch ein Steuergerät St, vorzugsweise ein Motorsteuergerät, erzeugt und an den Eingang P geführt. Unabhängig vom tatsächlichen Betriebszustand der Maschine 2 erhält der Regler 5 nunmehr eine simulierte Betriebszustandsinformation der Maschine 2, indem etwa beim Starten des Fahrzeugs vom Steuergerät St kein Signal mit charakteristischer Welligkeit an den Eingang P gegeben wird, obwohl die elektrische Maschine 2 wegen der mechanischen Kopplung mit dem Verbrennungsmotor bereits dreht. Dem Regler 5 wird dadurch vorgetäuscht, daß die Maschine 2 steht.

Der Regler 5 schaltet nunmehr die in Wirklichkeit drehende Maschine 2 elektrisch nicht ein, da gemäß dem noch nicht anwesenden, simulierten Phasensignal die Maschine 2 als stehend angesehen wird, während der Verbrennungsmotor bereits läuft. Tatsächlich dreht die Maschine 2, stellt aber keine elektrische Leistung zur Verfügung, da die Erregerwicklung des Rotors 3 wegen des fehlenden Phasensignals, d.h. dem simulierten Stillstand der Maschine, nicht bestromt wird.

Die elektrischen Verbraucher im Fahrzeug werden in dieser Zeit durch die Batterie 7 versorgt. Dadurch kann abhängig von Betriebsparametern eine Verzögerungszeit t₀ zwischen dem Starten des Verbrennungsmotors und dem tatsächlichen elektrischen Start der Elektromaschine 2 eingestellt werden. Bevorzugte Betriebsparameter sind z.B. die Umgebungstemperatur, der Ladezustand der Batterie 7, die Kühlwassertemperatur des Fahrzeugs, die Zahl der zugeschalteten elektrischen Verbraucher.

Günstig ist, bei niedrigen Außentemperaturen eine möglichst kleine Verzögerungszeit t₀ einzustellen oder den Generator 1 sofort mit dem Verbrennungsmotor zu starten. Dadurch wird eine übermäßige Belastung der Batterie 7 vermieden, die bei niedrigen Temperaturen auch nur ungenügend aufladbar ist.

Bei hohen Außentemperaturen, oder wenn der Katalysator nach kurzem Stillstand des Fahrzeugs noch nahe seiner Betriebstemperatur ist, kann die Verzögerungszeit sehr kurz gewählt werden oder der Generator 1 gleichzeitig mit dem Verbrennungsmotor eingeschaltet werden. Der Abgaskatalysator des Fahrzeugs ist dann sehr schnell betriebsbereit und unerwünschte Rohemissionen durch die zusätzliche Belastung durch den Generator 1 im Startbetrieb sind vernachlässigbar gering.

Bei moderaten Temperaturen zwischen den beiden Extrembereichen kann eine Verzögerungszeit t₀ dann so gewählt werden, daß beim laufendem Verbrennungsmotor und zwar mechanisch drehender, aber elektrisch nicht arbeitender Maschine 2 zuerst noch die Batteriekapazität der Batterie 7 ausreicht, um die elektrischen Verbraucher im Fahrzeug zu versorgen, während das vom Steuergerät St vorzugebende Phasensignal am Eingang P eine Maschine 2 im Stillstand anzeigt, d.h. es liegt kein Phasensignal am Eingang P an. Nach Ablauf der Verzögerungszeit t₀ wird dann der Generator 1 tatsächlich elektrisch eingeschaltet, indem ein Phasensignal vom Steuergerät St ausgegeben wird, und die Erregerwicklung des Rotors 4 wird bestromt. Die Verbraucher werden jetzt vom Generator 1 versorgt und die Batterie 7 von diesem wieder geladen. Je nach Ladezustand der Batterie oder auch je nach Alter der Batterie kann die Verzögerungszeit t₀ entsprechend eingestellt werden. Eine günstige Verzögerungszeit t₀ liegt bei 1-5 Minuten. In dieser Zeit kann der Katalysator genügend aufheizen.

In einer bevorzugten Ausgestaltung des Verfahrens wird bei moderaten Temperaturen eine feste Verzögerungszeit t₀ vorgegeben.

In einer bevorzugten Weiterbildung kann im Motorsteuergerät St die Verzögerungszeit t₀ entsprechend den Betriebsparametern verlängert oder verkürzt werden. Ist z.B. die Batterie 7 neu und sind die Außentemperaturen sommerlich hoch, kann die Verzögerungszeit t₀ verlängert werden. Bei kühleren Temperaturen, bei gealterter Batterie 7 und/oder wenn zusätzliche elektrische Verbraucher eingeschaltet sind, die die Batterie 7 stark belasten, kann die Verzögerungszeit t₀ entsprechend verkürzt werden. Die Bedingungen können entsprechend im Steuergerät St als Tabelle in üblicher Weise abgelegt sein.

Besonders günstig ist, daß gemäß der Erfindung kein zusätzlicher Steuereingang für das vom Steuergerät St simulierte Phasensignal notwendig ist, sondern ein vorhandener Eingang P des Reglers 5 genutzt wird. Dies ist besonders einfach und preiswert zu realisieren. Die ursprüngliche Signalleitung von der Generatorphasenwicklung des Stators 3 an den Regler 5 wird dazu entfernt.

Zusätzlich kann über die Frequenz des externen, simulierten Signals an den Regler 5, welches vorzugsweise von der Motorsteuerung des Fahrzeugs kommt, die Funktionsweise des Generators 1 beeinflußt werden.

Liegt kein elektrisches Signal, bzw. keine Welligkeit im Signal an, so wird simuliert, daß sich die Maschine 2 nicht dreht, unabhängig vom tatsächlichen Betriebszustand der Maschine 2. Liegt ein Signal mit einer Frequenz f an, so wird simuliert, daß sich die Maschine 2 dreht. Liegt die Frequenz f unterhalb einer ersten Grenzfrequenz f1 an, so kann die Maschine 2 im sogenannten Load-Response-Mode betrieben werden. Liegt die Frequenz oberhalb der Frequenz f1 oder bei einer höheren Frequenz f2>f1, kann die Maschine 2 ohne Load-Response-Mode betrieben werden. Der sogenannte Load-Response-Mode bedeutet, daß bis zu einer Frequenz f1 das Zuschalten der Last nicht sofort sprungartig auf die Kurbelwelle des Fahrzeugs gegeben wird, sondern mit einer Rampe erfolgt, so daß die Erregung des Rotors 3 und das mechanische Moment sanft ansteigen. Bei höherer Frequenz f2 kann das Zuschalten dann sprungartig, "hart" erfolgen. Durch die Simulation des Phasensignals können dazu zwei charakteristische und deutlich unterscheidbare Signale an den Reglereingang P angelegt werden.

Die Maschine 2 kann auch im Normalbetrieb elektrisch zu- oder abgeschaltet werden. Dies führt zu einer vorteilhaften Verbrauchsminderung des Fahrzeugs.

Sobald der Verbrennungsmotor im Schubbetrieb arbeitet, oder das Fahrzeug abgebremst wird, kann der Generator 1 vorteilhaft zugeschaltet werden. Beim Beschleunigen kann der Generator weggeschaltet werden, um schneller zu beschleunigen. Auch beim Anfahren, etwa nach einem Ampelstop, kann es günstig sein, den Generator 1 wegzuschalten, da dann das Fahrzeug besser beschleunigt werden kann.

## Patentansprüche

1. Verfahren zum Betreiben eines Kraftfahrzeugs, wobei ein Verbrennungsmotor in Drehbewegung versetzt wird und ein Generator (1) zur Versorgung eines Energiespeichers (7) und/oder eines Bordnetzes (8) im Fahrzeug in Bewegung versetzt wird, wobei der Generator (1) zumindest in der Startphase beim Anlassen des Fahrzeugs abhängig von Betriebsparametern gleichzeitig mit oder zeitverzögert gegenüber dem Verbrennungsmotor elektrisch gestartet wird, indem einem Regler (5) des Generators (1) ein Steuersignal zugeführt wird, welches einen Betriebszustand einer Elektromaschine (2) des Generators (1) simuliert.

2. Verfahren nach Anspruch 1, **dadurch gekennzeichnet, daß** unterhalb eines unteren Grenzwerts und oder oberhalb eines oberen Grenzwerts der Umgebungstemperatur (Tₘᵢₙ, Tₘₐₓ) der Generator (1) mit minimaler Zeitverzögerung (t₀) gegenüber oder gleichzeitig mit dem Verbrennungsmotor gestartet wird.

3. Verfahren nach Anspruch 1, **dadurch gekennzeichnet, daß** unterhalb eines unteren Ladegrenzwerts (Qₘᵢₙ) des Energiespeichers (7) der Generator (1) mit minimaler Zeitverzögerung (t₀) gegenüber oder gleichzeitig mit dem Verbrennungsmotor gestartet wird.

4. Verfahren nach Anspruch 1, **dadurch gekennzeichnet, daß** die Zeitverzögerung (t₀) zur Zuschaltung des Generators (1) abhängig von einer Zahl von zugeschalteten elektrischen Verbrauchern im Bordnetz erfolgt.

5. Verfahren nach Anspruch 1, **dadurch gekennzeichnet, daß** die Zeitverzögerung (t₀) zur Zuschaltung des Generators (1) abhängig von einer Kühlwassertemperatur des Fahrzeugs erfolgt.

6. Verfahren nach Anspruch 1, **dadurch gekennzeichnet, daß** die Zeitverzögerung (t₀) abhängig von Betriebsparametern des Fahrzeugs verändert wird.

7. Verfahren nach Anspruch 1, **dadurch gekennzeichnet, daß** der Generator (1) während eines Beschleunigungsvorganges im Normalbetrieb des Fahrzeugs weggeschaltet wird und/oder daß der Generator (1) zugeschaltet wird, sobald der Verbrennungsmotor im Schubbetrieb arbeitet oder abgebremst wird.

8. Anordnung zur Durchführung des Verfahrens nach Anspruch 1, wobei der Generator (1) eine Elektromaschine (2) mit Stator (3) und Rotor (4) und einen Regler (5) aufweist, wobei der Regler (5) einen Anschluß für eine Versorgungsspannung (B+), einen Anschluß zum Steuern der Erregerspule (DF), einen Masseanschluß (M) und einen Anschluß für ein Phasensignal (P) aufweist, wobei der Anschluß für das Phasensignal (P) mit einem Motorsteuergerät (St) verbunden ist.
